# EUROPEAN PATENT APPLICATION

(11) **EP 4 414 743 A1**
(43) Date of publication of application: **14.08.2024**
(21) Application number: 24155655.4
(22) Date of filing: 05.02.2024
(51) Int. Cl.: G01S 7/481, G02B 5/18, G02B 5/20, G02B 5/30

(54) **POLARIZATION SWITCHABLE MULTI-ZONE ILLUMINATION SYSTEM USING A POLARIZATION SWITCHABLE LIGHT SOURCE AND POLARIZATION SENSITIVE OPTIC**

(30) Priority: 07.02.2023 US 202318106908
(71) Applicant: STMicroelectronics International N.V., 1228 Plan-les-Ouates, Geneva (CH)
(72) Inventor: CARNEMOLLA, Enrico Giuseppe, EDINBURGH, EH38EN (GB); JOHNSON, Brandon Scott, EDINBURGH, EH6 5TE (GB)
(74) Representative: Cabinet Beaumont

(57) **Abstract**

A multi-zone illumination system includes a light source formed by first emitters configured to transmit a first light signal having a first polarization state and second emitters configured to transmit a second light signal having a second polarization state transverse to the first polarization state. An optic receives the first light signal and generates a first structured illumination of a first far field zone. The optic further receives the second light signal and generates a second structured illumination of a second far field zone. The first and second far field zones are offset from each other.

## Description

### TECHNICAL FIELD

The present invention generally relates to illumination systems for sensors, such as time-of-flight sensors.

### BACKGROUND

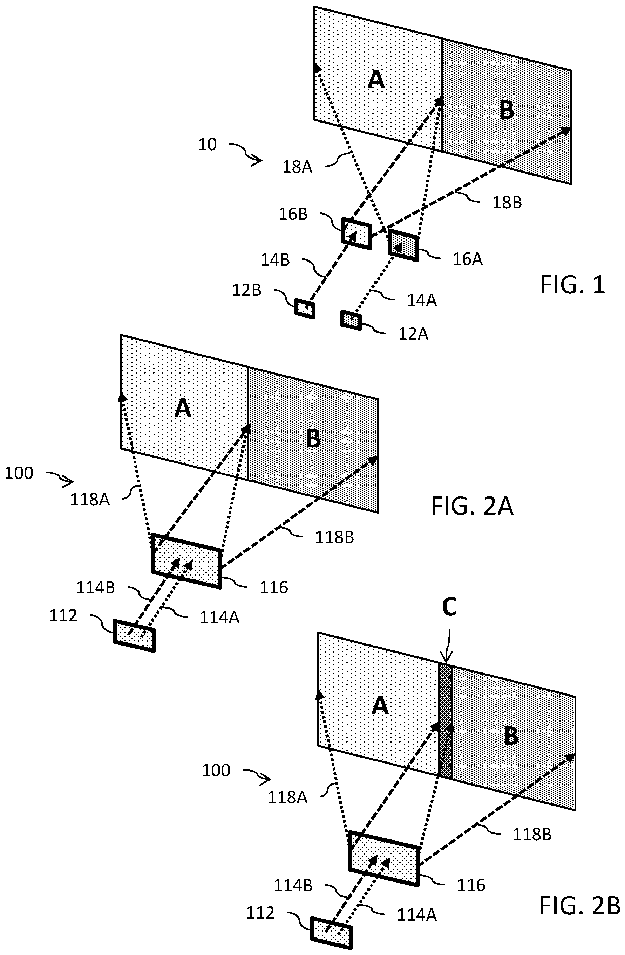

Reference is made to Figure 1 which illustrates a block diagram of a multi-zone illumination system 10. In this example, it is considered that illumination of two zones (zone A and zone B) in the far field is required. The system 10 includes a first light source 12A associated with illumination of the far field zone A and a second light source 12B associated with illumination of the far field zone B. Light 14A emitted from the first light source 12A is directed through a first diffractive optical element (DOE) 16A and directed towards illumination 18A of the far field zone A. Light 14B emitted from the second light source 12B is directed through a second DOE 16B and directed towards illumination 18B of the far field zone B. A benefit of the system 10 solution is associated with laser safety concerns - if only a subsection of the overall scene is illuminated at any one time, a lower optical power is required for the light sources.

A concern with the system 10 solution is the use of multiple components which introduce problems with increased cost, decreased yield due to system component alignment sensitivities, and larger packaging requirements.

There is accordingly a need in the art to address the foregoing concerns. There would be an advantage to provide a multi-zone illumination system requiring fewer components with reduced alignment sensitivities within a smaller package.

### SUMMARY

In an embodiment, a device comprises: a multi-zone illumination system, wherein said multi-zone illumination system comprises: a light source including a first plurality of emitters configured to transmit a first light signal having a first polarization state, and a second plurality of emitters configured to transmit a second light signal having a second polarization state transverse to the first polarization state; and an optic configured to receive the first light signal and generate a first structured illumination of a first far field zone and receive the second light signal and generate a second structured illumination of a second far field zone; wherein the first and second far field zones are offset from each other.

In an embodiment, a method comprises: activating a first channel of a light source; transmitting, by the first channel of the light source, a first light signal having a first polarization state; generating, by an optic, a first structured illumination of a first far field zone in response to the first light signal; activating a second channel of the light source; transmitting, by the second channel of the light source, a second light signal having a second polarization state transverse to the first polarization state; and generating, by the optic, a second structured illumination of a second far field zone in response to the second light signal; wherein the first and second far field zones are offset from each other.

The first/second structured illuminations may, for example, comprise the projection of a specific pattern (such as a dot or grid pattern) illumination in the far field zone or the projection of flood or substantially uniform or evenly spread illumination in the far field zone.

### BRIEF DESCRIPTION OF THE DRAWINGS

For a better understanding of the embodiments, reference will now be made by way of example only to the accompanying figures in which:
Figure 1 illustrates a block diagram of a first embodiment of a multi-zone illumination system;
Figures 2A and 2B each illustrate a block diagram of a second embodiment of a multi-zone illumination system;
Figure 3 illustrates a top view of a switchable polarization light source for the system of Figures 2A and 2B;
Figures 4 and 5 are top and perspective views, respectively, of a polarization sensitive diffractive optical element (DOE) for the system of Figures 2A and 2B;
Figure 6 illustrates an example structured illumination pattern;
Figures 7A and 7B illustrate the operation of the multi-zone illumination system of Figures 2A and 2B;
Figure 8 which shows a sensor incorporating the multi-zone illumination system of Figures 2A and 2B; and
Figure 9 illustrates construction details of the polarization sensitive DOE.

### DETAILED DESCRIPTION

Reference is made to Figure 2A which illustrates a block diagram of a multi-zone illumination system 100. In this example, it is considered that illumination of two zones (zone A and zone B; arranged, for example, laterally adjacent each other) in the far field is required. The system 100 includes a switchable polarization light source 112 that is controllable to emit light 114A having a first polarization (for example, TM polarized) associated with illumination of the far field zone A and emit light 114B having a second polarization, orthogonal to the first polarization (for example, TE polarized), associated with illumination of the far field zone B. The light 114A, 114B emitted from the light source 112 is directed through a polarization sensitive diffractive optical element (DOE) 116. The DOE 116 directs the light 114A having the first polarization towards a structured illumination 118A of the far field zone A and directs the light 114B having the second polarization towards a structured illumination 118B of the far field zone B.

In an alternative example implementation as shown in Figure 2B, the DOE 116 may be configured so that there is a slight overlap (zone C) of the far field zone A and far field zone B. The provision of the slight overlap (zone C) is optional in some applications.

In an embodiment, the switchable polarization light source 112 employs a single two-channel emitter circuit with one channel for each of two orthogonal polarization states. The light source 112 may comprise, for example, a plurality of vertical-cavity surface-emitting laser (VCSEL) elements. As will be discussed in further detail below, the light source 112 is a dual channel light source that switches between a first channel where certain VCSEL elements emit the first light signal 114A having a first polarization state, and a second channel where other VCSEL elements emit the second light signal 114B having a second polarization state orthogonal to the first polarization state. The configuration of the switchable polarization light source 112 will be discussed in further detail below.

In an embodiment, the polarization sensitive DOE 116 comprises a metasurface-based polarization sensitive optic projecting each of the two illuminations as a function of the light source polarization state. The DOE 116 receives the light signal 114A (first polarization) transmitted by the light source 112 and produces a first structured illumination 118A pattern at the far field zone A, and receives the light signal 114B (second polarization) transmitted by the light source 112 and produces a second structured illumination 118B pattern at the far field zone B. The configuration of the DOE 116 will be discussed in further detail below.

In an embodiment, the switchable polarization light source 112 comprises a plurality of first laser (VCSEL) emitters that emit light of a first polarization to form a light signal 114A (see, Figures 2A and 2B) and a plurality of second laser (VCSEL) emitters that emit light of a second polarization (orthogonal to the first polarization) to form a light signal 114B (see, Figures 2A and 2B). The first and second laser (VCSEL) emitters may, for example, be arranged in an array format. The first and second laser (VCSEL) emitters may, for example, be interleaved with each other in a pattern.

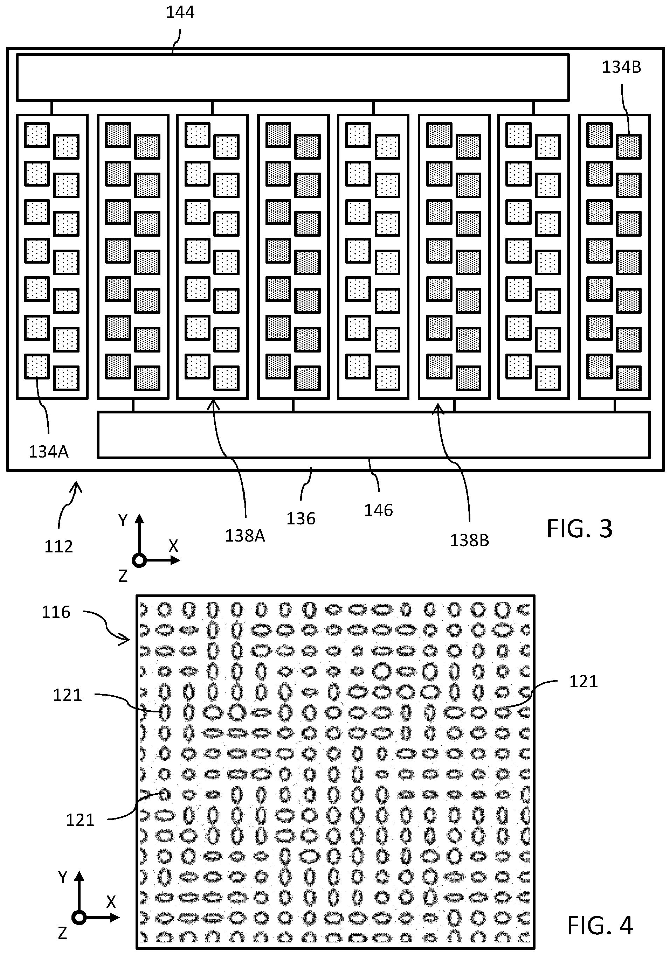

Reference is now made to Figure 3 which shows a top view of an example implementation of the switchable polarization light source 112. The light source 112 will be discussed with reference to the x-axis; the y-axis, which is transverse to the x-axis; and the z-axis, which is transverse to both the x-axis and the y-axis. The light source 112 includes a plurality of laser (VCSEL) emitters 134A, 134B on a substrate 136. The substrate 136 may be a semiconductor substrate, printed circuit board, or another type of supporting structure. Each of the emitters 134A emits light of a first polarization to form a light signal 114A (see, Figures 2A and 2B). Each of the emitters 134B emits light of a second polarization, orthogonal to the first polarization, to form a light signal 114B (see, Figures 2A and 2B). In the view shown in Figure 3, the emitters 134A, 134B emit light in a direction along the z-axis. Stated differently, the light emitted by each of the emitters 134A, 134B propagates out of the page.

In one embodiment, the emitters 134A, 134B are arranged as an array in a number of alternating (interleaved) columns 138A, 138B positioned along the x-axis, with each of the columns 138A, 138B extending along the y-axis. Each of the columns 138A includes emitters 134A arranged in one or more sub-columns emitters. Each of the columns 138B includes emitters 134BA arranged in one or more sub-columns emitters. The emitters of each sub-column are aligned with each other along the y-axis. The columns 138A of emitters 134A are electrically coupled to each other through a circuit 144 to form a first emitter channel, and the columns 138B of emitters 134B are electrically coupled to each other through a circuit 146 to form a second emitter channel.

The emitters 134A of the first emitter channel emit a light signal having a first linear polarization state. In one embodiment, the emitters 134A of the first emitter channel emit a transverse magnetic (TM) polarized light signal with a magnetic field transverse to a propagation direction of the light signal. In contrast, the emitters 134B of the second emitter channel emit a light signal having a second linear polarization state orthogonal to the first linear polarization state. In one embodiment, the emitters 134B of the second emitter channel emit a transverse electric (TE) polarized light signal with an electric field transverse to the propagation direction of the light signal and transverse to the magnetic field of the light signal emitted by emitters of the first emitter channel. As a result, the light source 112 includes an array of emitters 134 per orthogonal polarization state.

The emitters 134A of the first emitter channel and the emitters 134B of the second emitter channel may be configured to generate light in any wavelength range suited to the system application. As a non-limiting example, the emitters 134A of the first emitter channel and the emitters 134B of the second emitter channel each have a wavelength between 900 and 1000 nanometers.

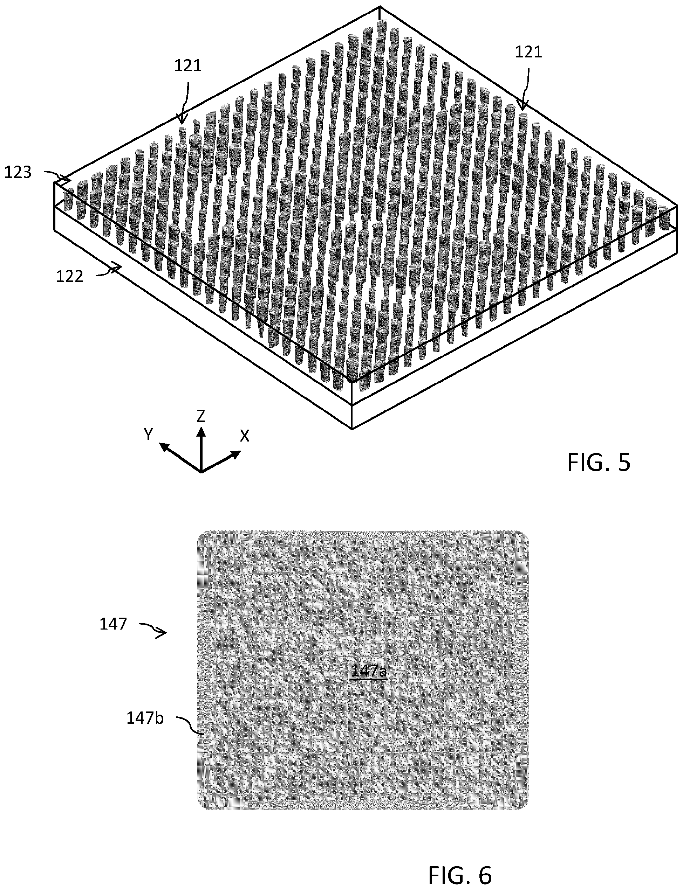

Reference is now made to Figures 4 and 5. Figure 4 is a top view of the polarization sensitive DOE 116 according to an embodiment disclosed herein. Figure 5 is a perspective view of the polarization sensitive DOE 116 according to an embodiment disclosed herein. As discussed above, the polarization sensitive DOE 116 is configured to receive the light signal 114A of the first polarization from the emitters 134A and produce a corresponding first structured illumination 118A pattern at the far field zone A. Furthermore, the polarization sensitive DOE 116 is configured to receive the light signal 114B of the second polarization from the emitters 134B and produce a corresponding second structured illumination 118B pattern at the far field zone B. An advantage of the polarization sensitive DOE 116 is that it can reduce the divergence requirement per function and support a scanning capability over multiple far fields within a scene. Additionally, per-channel assembly tolerance is greatly reduced as only a single optical alignment with the light source 112 is required. In an example implementation, the first and second structured illumination pattern comprise dot or grid projector illuminations of the far field zone. In another example implementation, the first and second structured illumination pattern comprise flood illuminations of the far field zone.

The polarization sensitive DOE 116 is a metasurface-based polarization sensitive optic with dual optical functions. Typically, transmission optical structures are implemented with diffractive optical elements (DOE) in subwavelength features that opportunely manipulate a light source output wave front into a specific far field intensity profile, such as flood or dot projection. However, with the recent advancements in optical metasurface development, subwavelength dielectric nanostructures have become a remarkable candidate as a technological platform for a DOE, as optical metasurfaces are compatible with semiconductor fabrication processes (e.g., lithography), provide a potentially large number of phase quantization levels, and are suitable for the implementation of a variety of optical elements. Moreover, because of the natural birefringence displayed by asymmetric nanostructures, a light polarization dependence can be also achieved, providing the possibility to encode different distinctive functionalities to the same optics dependent on light polarization, wherein those distinctive functionalities become accessible by the selection of a proper input polarization state for the received light signal.

The polarization sensitive DOE 116 includes an array of asymmetrical nano meta-elements 121. The meta-elements 121 exhibit an asymmetry of features having various dimensions. For example, as shown in Figures 4 and 5, a first set of the meta-elements 121 have a cross-sectional shape (in the x-y plane) with a major axis extending along the x-axis, a second set of the meta-elements 121 have a cross-sectional shape (in the x-y plane) with a major axis extending along the y-axis, and a third set of the meta-elements 121 have a cross-sectional shape (in the x-y plane) that is substantially circular with substantially equal dimensions along the x-axis and the y-axis. It will further noted that the first and second sets may each include sub-sets having different dimensions for the major and/or minor axes. The meta-elements 121 are fabricated by employing semiconductor processes, such as deep UV photolithography.

In an embodiment, the meta-elements 121 are supported by a substrate 122 and are encapsulated by an encapsulation material 123 (such as silicon oxide). The polarization sensitive DOE 116 is positioned relative to the switchable polarization light source 112 such that the length of the meta-elements 121 axially extends in the propagation direction of the light signals 114A and 114B (i.e., along the direction of the x-axis).

The meta-elements 121, supporting substrate and the included encapsulation material are made of one or more dielectric materials. In an embodiment, the meta-elements 121, supporting substrate and any included encapsulation material are made of different materials. In an embodiment, a delta between refractive indices of the materials used for the meta-elements 121, supporting substrate and any included encapsulation material is in a range between 1.5 and 2.

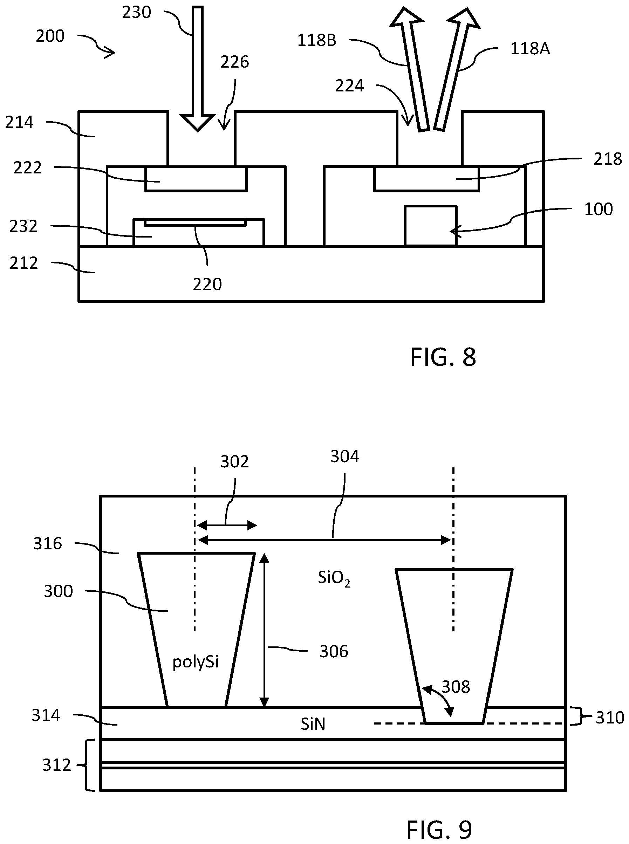

As an example, the following parameters for the meta-elements 121may be used, with reference to Figure 9: scatterer shape - asymmetric truncated cone 300; scatterer material - polysilicon; on axis dimension range (302) - 120 to 360nm, both x-axis and y-axis, all combinations; lattice (304) - 470nm; height 306 - 700nm; SWA (308) - 92 degrees; and overetch (310) - -20nm. The supporting substrate for the meta-elements 121 may, for example, comprise one or more anti-reflective coating layers (312) and a silicon nitride layer( 314). The encapsulation material layer (316) may, for example, comprise silicon oxide.

With this example configuration, the polarization sensitive DOE 116 may exhibit the following optical specifications: effective focal length - 1145.8µm; working distance - 991.4µm; horizontal field of view - 42.3°; vertical field of view - 51.2°; transmission - >80%; and zeroth-order - <0.3%.

Structured illumination functionalities for two distinct (and possible partially overlapping) far field zones A and B are simultaneously implemented in the same physical DOE, namely the asymmetrical meta-elements 121 of the polarization sensitive DOE 116, by translating the functional design structured illuminations of the two far field zones into the physical design of the included nanostructures. For example, a translation from the required elements of the phase profile to appropriate shapes and dimensions of the asymmetrical meta-elements 121 is performed. The translation process may generally include simultaneously minimizing the delta between (1) the desired phase retardation to generate the two structured illuminations in specific optic coordinates and (2) the phase retardation provided in both the first and second polarizations (TM and TE polarization) of the light signals 114A and 114B by the meta-elements 121, represented by the meta-element dimensions along the x-axis and y axis.

In one embodiment, each of the meta-elements 121 displays a different optical behavior (e.g., transmission, phase retardation, etc.) as a function of incident polarization state (e.g., TM or TE polarization) of the received light signal and the dimensions of the meta-elements along the x-axis and y-axis. Namely, the dimensions of the meta-elements 121 along the x-axis and y axis are optimized to provide the proper phase retardation to generate a structured illumination pattern in the far field zone A from the light signal 114A generated by the first channel of the switchable polarization light source 112 in the first (TM) polarization, and provide the proper phase retardation to generate a structured illumination pattern in the far field zone B from the light signal 114B generated by the second channel of the switchable polarization light source 112 in the second (TE) polarization. Stated differently, the dimensions of the meta-elements 121 along the x-axis and y axis are selected to alter the phase of the light signal 114A transmitted by the first channel to transform the light in to a structured illumination projection pattern directed towards the far field zone A, and to alter the phase of the light signal 114B transmitted by the second channel to transform the light in to a structured illumination projection pattern directed towards the far field zone B.

As discussed above, the emitters of the first channel emit a light signal 114A having a first linear polarization state (for example, TM polarized light); and the emitters of the second channel emit a light signal 114B having a second linear polarization state orthogonal to the first polarization state (for example, TE polarized light). As a result, the polarization sensitive DOE 116 projects a first and second structured illuminations 118A, 118B as a function of the polarization state of the light emitted by the switchable polarization light source 112. Namely, the polarization sensitive DOE 116 projects a structured illumination 118A projection pattern in the far field zone A upon receiving TM polarized light generated by the first channel, and projects a structured illumination 118B projection pattern in the far field zone B upon receiving TE polarized light generated by the second channel. Accordingly, structured illumination of two distinct, and partially overlapping, zones may be chosen by selection of the first channel or the second channel, respectively, of the switchable polarization light source 112.

Figure 6 illustrates a structured illumination pattern 147 produced by the polarization sensitive DOE 116 according to an embodiment disclosed herein. As shown in Figure 6, in an example, the light in this structured illumination is relatively evenly (or uniformly) spread over a large central region 147a of space. There may exist, in some implementations, a light gradient associated with edge regions 147b of the structured illumination pattern 147. The structured illumination pattern 147 in Figure 6 is representative of the illumination provided for each of the far field zone A and the far field zone B. The partial overlap of the zones A and B, as shown at with zone C in Figure 2B, accounts for edge light gradient regions.

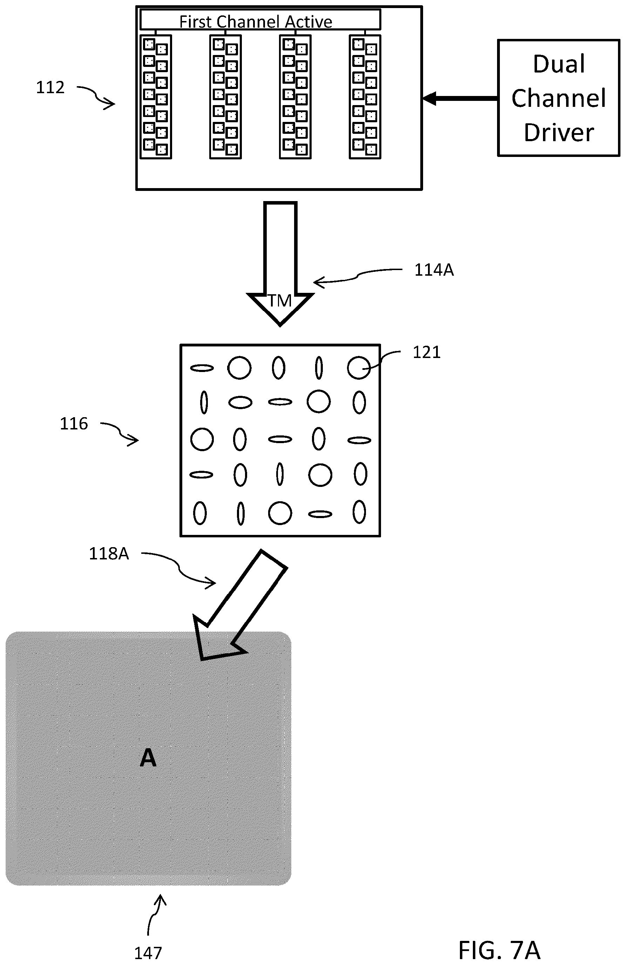

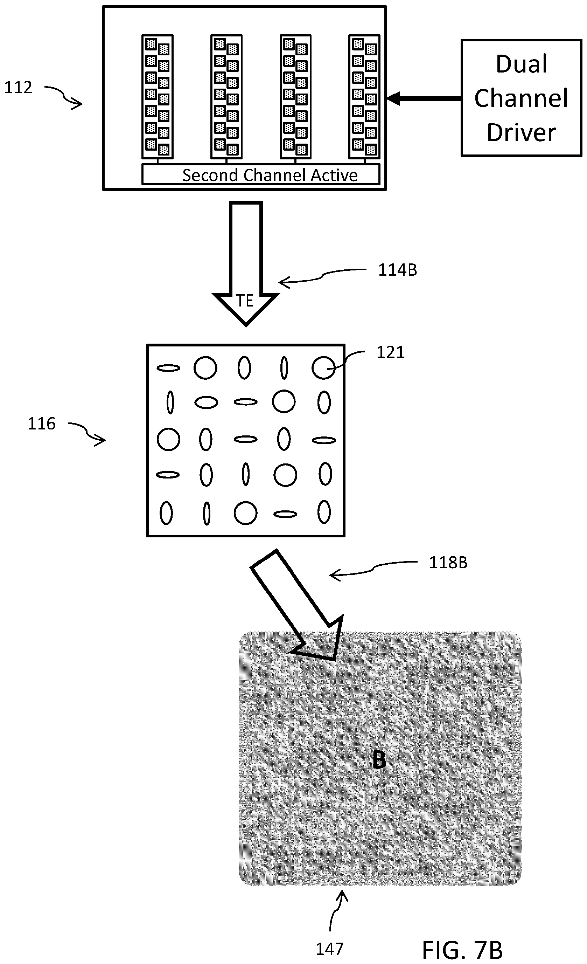

Figure 7A and 7B illustrate the operation of the multi-zone illumination system 100. In Figure 7A, a dual channel driver selectively activates the first channel to turn on the plurality of laser emitters 134A of the light source 112. The emitters 134A of the first channel emit a light signal 114A having a first polarization state, such as TM polarized light, that is directed towards the polarization sensitive DOE 116. The meta-elements 121 of the polarization sensitive DOE 116 are configured to provide the proper phase retardation dependent on the TM polarized light to generate an illumination 118A having a structured projection pattern in the far field zone A. In Figure 7B, the drive circuit selectively activates the second channel to turn on the plurality of laser emitters 134B of the light source 112. The emitters 134B of the second channel emit a light signal 114B having a second polarization state, such as TE polarized light, that is directed towards the polarization sensitive DOE 116. The meta-elements 121 of the polarization sensitive DOE 116 are configured to provide the proper phase retardation dependent on the TE polarized light to generate an illumination 118B having a structured projection pattern in the far field zone B. In a preferred implementation, the dual channel driver will alternatively select the activation of the first and second channels so as to alternately illuminate the far field zones A and B.

Reference is now made to Figure 8 which shows a sensor 200 according to an embodiment disclosed herein. The sensor 200 is a distance or depth sensor, such as a time-of-flight (ToF) sensor, that determines distances between the sensor 200 and a target object external to the sensor 200. The sensor 200 may be included in various electronic devices (e.g., mobile handsets, cameras, tablets, laptops, and computers) for a variety of different applications, such as face recognition, proximity detection, and ambient light sensing. It is noted that the embodiments discussed herein may also be applied to other types of optical devices that utilize structured illumination.

The sensor 200 includes a substrate 212, a body (or cover) 214, a multi-zone illumination system 100 (like that shown in Figures 2A and 2B and described herein), a transmission optical structure 218, a detector 220, and a reception optical structure 222. The substrate 212 provides a support platform for the sensor 200. The body 214, the multi-zone illumination system 100, the transmission optical structure 218, the detector 220, and the reception optical structure 222 are positioned on the substrate 212. The substrate may be any type of rigid material, such as plastic, metal, glass, and semiconductor material. In one embodiment, the substrate 212 is a printed circuit board that includes one or more electrical components (e.g., capacitors, transistors, processors, etc.).

The body 214 is positioned on the substrate 212. The substrate 212 and the body 214, together, form an enclosure or package that contains the multi-zone illumination system 100, the transmission optical structure 218, the detector 220, and the reception optical structure 222. The substrate 212 and the body 214 protect the multi-zone illumination system 100, the transmission optical structure 218, the detector 220, and the reception optical structure 222 from an external environment.

The body 214 includes an output aperture 224 and an input aperture 226. The output aperture 224 directly overlies and is aligned with the multi-zone illumination system 100 and the transmission optical structure 218. The output aperture 224 supports mounting of the reception optical structure 222 and provides a hole for the light signals providing illuminations 118A, 118B of the far field to pass through. These light signal illuminations are toward the target object in the far field where, for example, a distance between the target object and the sensor 200 is being determined. As discussed in detail herein, the light signal illuminations 118A, 118B each provide for a structured illumination pattern corresponding to distinct, but perhaps slightly overlapping, far field zones A and B. The input aperture 226 directly overlies and is aligned with the detector 220 and the reception optical structure 222. The input aperture 226 supports mounting of the transmission optical structure 218 and provides a hole for a return light signal 230 to pass through. The light signal 230 is generated in response to the light signal illuminations 118A, 118B reflected from the target object.

The multi-zone illumination system 100 is positioned on the substrate 212. The multi-zone illumination system 100 directly underlies and is aligned with the transmission optical structure 218 and the output aperture 224. It will be noted that in an embodiment the transmission optical structure 218 may comprise a component of the multi-zone illumination system 100 - perhaps, for example, being a part of or mounted to the polarization sensitive DOE 116.

The detector 220 is positioned on the substrate 212. The detector 220 directly underlies and is aligned with the reception optical structure 222 and the input aperture 226. In one embodiment, the detector 220 is integrated into a semiconductor substrate 232. The substrate 232 may also include other various electrical components (e.g., transistors, capacitors, resistors, processors, etc.) and devices (e.g., a reference sensor array). In a preferred embodiment, the detector 220 is implemented by an array of single photon avalanche diodes (SPADs). The SPAD array operates to detect the signal reflection from each of the alternating illuminations 118A, 118B of the far field zones A and B, respectively. Reconstruction of the full field image can then be made using conventional signal processing operations known in the art.

While the invention has been illustrated and described in detail in the drawings and foregoing description, such illustration and description are considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

The invention can be defined by the following examples.

Example 1: A device, comprising:
a multi-zone illumination system, wherein said multi-zone illumination system comprises:
   a light source including a first plurality of emitters configured to transmit a first light signal having a first polarization state, and a second plurality of emitters configured to transmit a second light signal having a second polarization state transverse to the first polarization state; and
   an optic configured to receive the first light signal and generate a first structured illumination of a first far field zone and receive the second light signal and generate a second structured illumination of a second far field zone;
wherein the first and second far field zones are offset from each other.

Example 2: The device of example 1, wherein the first and second far field zones are adjacent each other.

Example 3: The device of example 1, wherein the first and second far field zones slightly overlap each other.

Example 4: The device of any of examples 1 to 3, wherein the first polarization state is linear, and the second polarization state is orthogonal to the first polarization state.

Example 5: The device of any of examples 1 to 4, wherein the first plurality of emitters and second plurality of emitters are arranged in an alternating pattern.

Example 6: The device of any of examples 1 to 5, wherein the optic includes a plurality of meta-elements that extend in a propagation direction of the first light signal and the second light signal.

Example 7: The device of example 6, wherein each of the plurality of meta-elements has an asymmetrical shape.

Example 8: The device of example 6, wherein the plurality of meta-elements includes a first set of meta-elements having a cross-sectional shape with a major axis extending in a first direction, and a second set of meta-elements having a cross-sectional shape with a major axis extending in a second direction transverse to the first direction.

Example 9: The device of example 8, wherein the plurality of meta-elements includes a third set of meta-elements having a cross-sectional shape that is substantially circular.

Example 10: The device of example 6, wherein the plurality of meta-elements is made of a first material and are encapsulated within a layer made of a second material.

Example 11. The device of example 10, wherein the first material and second material have different indices of refraction.

Example 12: The device of any of examples 1 to 11, further comprising a light reception system configured to detect light generated in response to reflection of the first and second structured illuminations.

Example 13: The device of any of examples 1 to 12, wherein said optic is configured to alter a phase of the first light signal to produce the first structured illumination at the first far field zone and alter a phase of the second light signal to produce the second structured illumination are the second far field zone.

Example 14: The device of any of examples 1 to 13, wherein first and second structured illuminations are dot projections.

Example 15: The device of any of examples 1 to 13, wherein first and second structured illuminations are flood projections.

Example 16: The device of any of examples 1 to 13, wherein first and second structured illuminations are grid projections.

Example 17: A method, comprising:
activating a first channel of a light source;
transmitting, by the first channel of the light source, a first light signal having a first polarization state;
generating, by an optic, a first structured illumination of a first far field zone in response to the first light signal;
activating a second channel of the light source;
transmitting, by the second channel of the light source, a second light signal having a second polarization state transverse to the first polarization state; and
generating, by the optic, a second structured illumination of a second far field zone in response to the second light signal;
wherein the first and second far field zones are offset from each other.

Example 18: The method of example 17, wherein the first and second far field zones are adjacent each other.

Example 19: The method of example 17, wherein the first and second far field zones slightly overlap each other.

Example 20: The method of any of examples 17 to 19, wherein the first polarization state is linear, and the second polarization state is orthogonal to the first polarization state.

Example 21: The method of any of examples 17 to 20, further comprising alternating between activating the first channel and activating the second channel.

Example 22: The method of any of examples 17 to 21, further comprising detecting light generated in response to reflection of the first and second structured illuminations.

Example 23: The method of any of examples 17 to 22, wherein generating the first structured illumination comprises altering a phase of the first light signal by said optic to produce the first structured illumination at the first far field zone and wherein generating the second structured illumination comprises altering a phase of the second light signal by said optic to produce the second structured illumination are the second far field zone.

Example 24: The method of any of examples 17 to 23, wherein first and second structured illuminations are dot projections.

Example 25: The method of any of examples 17 to 23, wherein first and second structured illuminations are flood projections.

Example 26: The method of any of examples 17 to 23, wherein first and second structured illuminations are grid projections.

## Claims

1. A device, comprising:
a multi-zone illumination system, wherein said multi-zone illumination system comprises:
a light source including a first plurality of emitters configured to transmit a first light signal having a first polarization state, and a second plurality of emitters configured to transmit a second light signal having a second polarization state transverse to the first polarization state; and
an optic configured to receive the first light signal and generate a first structured illumination of a first far field zone and receive the second light signal and generate a second structured illumination of a second far field zone;
wherein the first and second far field zones are offset from each other.

2. A method, comprising:
activating a first channel of a light source;
transmitting, by the first channel of the light source, a first light signal having a first polarization state;
generating, by an optic, a first structured illumination of a first far field zone in response to the first light signal;
activating a second channel of the light source;
transmitting, by the second channel of the light source, a second light signal having a second polarization state transverse to the first polarization state; and
generating, by the optic, a second structured illumination of a second far field zone in response to the second light signal;
wherein the first and second far field zones are offset from each other.

3. The device of claim 1, or the method of claim 2, wherein the first and second far field zones are adjacent each other.

4. The device of claim 1, or the method of claim 2, wherein the first and second far field zones slightly overlap each other.

5. The device of any of claims 1, 3 or 4, or the method of any of claims 2 to 4, wherein the first polarization state is linear, and the second polarization state is orthogonal to the first polarization state.

6. The device of any of claims 1, 3 to 5, or the method of any of claims 2 to 5, wherein the first plurality of emitters and second plurality of emitters are arranged in an alternating pattern.

7. The device of any of claims 1, 3 to 6, or the method of any of claims 2 to 6, wherein the optic includes a plurality of meta-elements that extend in a propagation direction of the first light signal and the second light signal, each of the plurality of meta-elements preferably having an asymmetrical shape.

8. The device or the method of claim 7, wherein the plurality of meta-elements includes a first set of meta-elements having a cross-sectional shape with a major axis extending in a first direction, and a second set of meta-elements having a cross-sectional shape with a major axis extending in a second direction transverse to the first direction, the plurality of meta-elements preferably including a third set of meta-elements having a cross-sectional shape that is substantially circular.

9. The device or the method of claim 7 or 8, wherein the plurality of meta-elements is made of a first material and is encapsulated within a layer made of a second material, the first material and second material preferably having different indices of refraction.

10. The device of any of claims 1, 3 to 9, or the method of any of claims 2 to 9, further comprising detecting light generated in response to reflection of the first and second structured illuminations, preferably by a light reception system configured therefore.

11. The device of any of claims 1, 3 to 10, or the method of any of claim 2 to 10, wherein first and second structured illuminations are dot projections.

12. The device of any of claims 1, 3 to 10, or the method of any of claims 2 to 10, wherein first and second structured illuminations are flood projections.

13. The device of any of claims 1, 3 to 10, or the method of any of claims 2 to 10, wherein first and second structured illuminations are grid projections.

14. The device of any of claims 1, 3 to 13, ot the method of any of claims 2 to 13, further comprising alternating between activating the first channel and activating the second channel.

15. The device of any of claims 1, 3 to 14, or the method of any of claims 2 to 14, wherein generating the first structured illumination comprises altering a phase of the first light signal by said optic to produce the first structured illumination at the first far field zone and wherein generating the second structured illumination comprises altering a phase of the second light signal by said optic to produce the second structured illumination are the second far field zone, said optic being preferably configured for that purpose.
